# EUROPEAN PATENT APPLICATION

(11) **EP 1 623 851 A1**
(43) Date of publication of application: **08.02.2006**
(21) Application number: 05425527.8
(22) Date of filing: 21.07.2005
(51) Int. Cl.: B60F 1/04

(54) **Bimodal vehicle (road-railway) coupled with two railway bogies equipped with buffing and draw gears**

(30) Priority: 03.08.2004 IT TV20040091
(71) Applicant: Campadello, Lucio, 00165 Roma (IT)
(72) Inventor: Compadello, Lucio, 00165 Roma (IT); Croccolo, Franz, 35128 Padova (IT)

(57) **Abstract**

Changing vehicle bimodal (road-railway), qualified or for driving along roads like a trailer or on railway like a goods wagon.

The vehicle is made by a road trailer with one or more axles, transporting goods of different nature setting up (like ordinary flat wagon or refrigerated wagon or covered van or tank wagon etc). The road axles are lifting and connected welded to the frame.

At the two extremities of frame can be connected stiffness two railway bogies equipped with buffing and draw gears, so that on the whole the vehicle becomes a railway wagon.

The change from road trailer and railway wagon can be made without the use of external machines of lifting.

## Description

The present patent of industrial invention concerns a road trailer qualified with one or two or three axles), transporting goods of different nature setting up (like ordinary flat wagon or refrigerated wagon or covered van or tank wagon etc) equipped with a hydraulic or mechanic system that is able to block two railway bogies at the ends of frame so that on the whole the vehicle becomes a railway wagon qualified to run on the railway without restrictions and to be put in marshalling of a goods train without restrictions.

The change from road trailer and railway wagon can be made without the use of external machines of lifting. It is possible so to do the transport door to door in an economic and simple way

Actually road holds the biggest per cent of goods traffic because is able to make the transport door to door.

To shift a quantity of goods transport from road to railway and to do the transport door to door actually we can use the intermodal system that needs big investment and equipments very expensive so that the system is justified only if the quantity of goods in each terminal is very high.

Another system used to realize the door to door transport is to use trailers supported on railway bogies but every bogie support the ends of two trailer so that the composition of train is blocked and every damage during the running is very complex to solve because it is impossible to withdraw a single wagon.

Another typology of bimodal vehicle, studied to solve the problem of blocked train is a vehicle equipped with road axles and with buffing and draw gears. A mechanic system is able to move the buffing and draw gears so that in road version the buffing and draw gears are completely gone back in frame.

On the contrary, in railway version, the mechanic system moves the buffing and draw gears out of the frame so that the vehicle can be put in the marshalling of a goods train.

This type of bimodal vehicle has the following drawbacks:
- The long time necessary to move the buffing and draw gears;
- The cost of mechanic system to move the buffing and draw gears
- In road version , the weight of buffing and draw gears reduces the useful weight of vehicle that is not competitive with normal trailers.

To reduce the tare of road version there is another kind of vehicle Bimodal road-railway that is a frame of a wagon with the possibility with two different little frames to college the road axels in the road version or two bogies in the railway version.

This kind of vehicle bimodal has the great complication of two little frame moving and two different systems of block. Moreover the change from railway version and road version is not easy because when a bogie is dismantled the vehicle must be supported by an external lifting till the little frame with road axels will be set up.and blocked.

The new vehicle bimodal road-railway can circulate on railway without special rules and it can be put in marshalling of goods trains. It does.not request lifting or special machines to change its mode from railway to road.

The new vehicle bimodal road-railway is practically a trailer S reinforced, and two special railway bogies **C** with two beams of coupling between frame and bogies. On the beams are setted up the buffing and draw gears, so that when the vehicle is in road version buffing and draw gears are not set up.

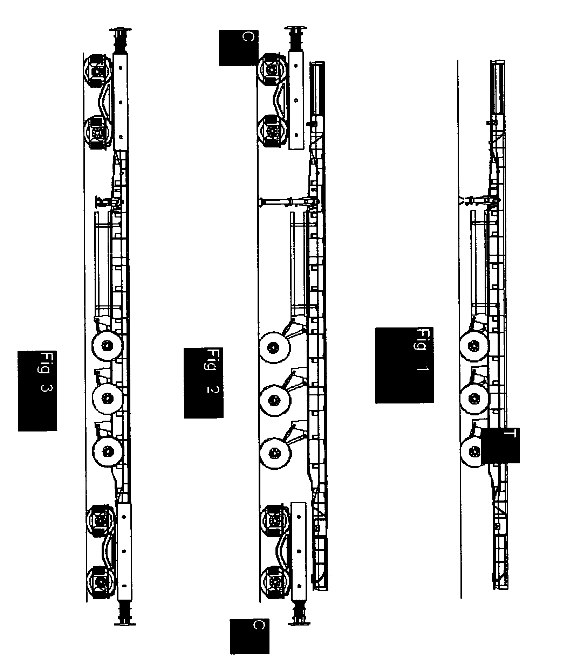

On the Fig. 1 the vehicle is in road version separated from the railway bogies. It is a normal trailer towed by a motor driving. On the Fig 1 the vehicle is flat but does not change the Patent of industrial invention if the wagon has a different setting like ordinary flat wagon or refigerated wagon or covered van or tank wagon etc).

To the frame of trailer S are welded the road axles a with pneumatic suspensions and brakes system. The vehicle is completed with two telescopic legs and with the centre pin and lighting plant.

The road axles can be lifted by the pneumatic suspensions so that the vehicle can get three different heights. P1 the height of road running.

P2 the height of changing from road trailer to railway wagon.

P3 the height of railway running.

In Fig 2 the vehicle is shown in the changement from road version to railway wagon . The frame of trailer is lifted utilising the pneumatic suspensions and the telescopic legs z so that the railway bogies **C** can be put under the frame. Than lowing the frame **S** with the pneumatic suspensions it is possible to block the frame to the beam T.

The same lowing of frame can be made for the other bogie but utilising the pneumatic legs **z .**

Each beam T is equipped with buffing and draw gears

In Fig.3 is showed the vehicle in railway version with two bogies C connected to the frame S. The road axles are lifted so that they don't interfere with railway gauge.

Every bogie are equipped with hydraulic brake gear hydraulic clutch with other wagons.

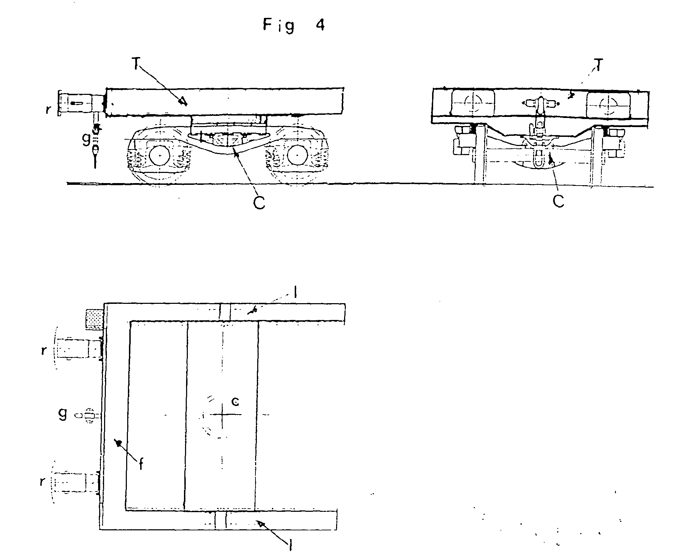

In Fig 4 is showed a bogie with the beam T. The railway bogie is made with components approved by the Italian railway.

Between the beam T and the bogie C is placed a bearer plates c so that the bogie can rotate in every bend.

Every beam T is made with two lateral beam 1 and a frontal beam f. On the frontal one are fixed the buffers r and the coupling hook g.

The beam T has a section sloped to facilitate the centring of frame S with the bodie C.

When the frame is supported by the structure T is possible to activate the mechanism that block the bogie C to the frame S

Lifting the road axles a by the pneumatic suspensions the Trailer is transformed in a wagon with two bogies, qualified to circulate on every European railway.

Every detail or component can be substituted with other similar without for this to exit from this Patent.

## Claims

1. Bimodal Vehicle (road- railway), coupling railway bogies equipped with buffing and draw gears, constituted by a trailer with one or more axles lifting and fixed to frame. The vehicle is suitable for transporting different goods in order to the setting like ordinary flat or refigerated or covered van or tank etc).

2. Bimodal Vehicle (road- railway), coupling railway bogies equipped with buffing and draw gears, like the claim previous, distinguished by the fact that can circulate along roads like a trailer and can circulate on railway like a normal goods wagon.

3. Bimodal Vehicle (road- railway), coupling railway bogies equipped with buffing and draw gears, like the claim previous, distinguished by the fact that its frame can be coupled with two railway bogies, so that in the whole it becomes a railway wagon.

4. Bimodal Vehicle (road- railway), coupling railway bogies equipped with buffing and draw gears, like the claim previous, distinguished by the fact each special railway bogie is supplied with a beam that couple stiff the bogie to the frame and is supplied with a bearer plate that leave bogies rotate in every bend.

5. Bimodal Vehicle (road- railway), coupling railway bogies equipped with buffing and draw gears, like the claim previous, distinguished by the fact the beam of interface between frame and each bogie are equipped with buffing and draw gears.

6. Bimodal Vehicle (road- railway), coupling railway bogies equipped with buffing and draw gears, like the claim previous, distinguished by the fact the change from road vehicle and railway wagon doesn't need of external lifting equipments.
